# EUROPÄISCHE PATENTSCHRIFT

(11) **EP 3 058 427 B1**
(45) Veröffentlichungstag und Bekanntmachung des Hinweises auf die Patenterteilung: **06.12.2017**
(21) Anmeldenummer: 14789541.1
(22) Anmeldetag: 10.10.2014
(51) Int. Cl.: G05B 19/042

(54) **VERFAHREN UND SYSTEM ZUM FERNBEDIENEN EINER WERKZEUGMASCHINE MITTELS EINES MOBILEN KOMMUNIKATIONSGERÄTS**
METHOD AND SYSTEM FOR REMOTELY OPERATING A MACHINE TOOL BY MEANS OF A MOBILE COMMUNICATION DEVICE
PROCÉDÉ ET SYSTÈME DE TÉLÉCOMMANDE D'UNE MACHINE-OUTIL AU MOYEN D'UN DISPOSITIF DE TÉLÉCOMMUNICATION MOBILE

(30) Priorität: 15.10.2013 DE 102013220865
(43) Veröffentlichungstag der Anmeldung: 24.08.2016
(73) Patentinhaber: TRUMPF Werkzeugmaschinen GmbH + Co. KG, 71254 Ditzingen (DE)
(72) Erfinder: BAUER, Klaus, 71254 Ditzingen (DE); GÖRG, Christian, 71696 Moeglingen (DE); KAHMEN, Andreas, 52072 Aachen (DE); LENDLE, Manfred, 71254 Ditzingen (DE); HEISENBERG, David, 71229 Leonberg (DE); LOHRMANN, Rainer, 70825 Korntal-Muenchingen (DE)
(74) Vertreter: Kohler Schmid Möbus Patentanwälte
(86) Internationale Anmeldenummer: PCT/EP2014/071762
(87) Internationale Veröffentlichungsnummer: WO 2015/055530

(56) Entgegenhaltungen:
- DE-A1- 3 813 590
- DE-A1-102012 005 975

## Beschreibung

Die vorliegende Erfindung betrifft ein Verfahren zum Fernbedienen einer Werkzeugmaschine, die ein stationäres Bediengerät mit einem Steuerungsmodus zur Steuerung der Werkzeugmaschine und mit einem Modus ohne Steuerungsberechtigung aufweist, mittels eines mobilen Kommunikationsgeräts gemäß Oberbegriff von Anspruch 1, sowie ein System zur Fernbedienung einer Werkzeugmaschine gemäß Oberbegriff von Anspruch 9 und ein zugehöriges mobiles Kommunikationsgerät.

Ein derartiges Verfahren und ein derartiges System sind durch die DE 38 13 590 A1 bekannt geworden.

Um zu verhindern, dass eine Werkzeugmaschine unbeabsichtigt durch Signale von einem Fernsteuerteil einer anderen Maschine beeinflusst wird, ist es aus der DE 38 13 590 A1 bekannt, die Maschinensteuerung und das Fernsteuerteil durch einen vorgegebenen Code eindeutig aufeinander abzustimmen. Dabei weist ein installiertes Steuerpult eine Ablage für das Fernsteuerteil auf, die mit einer Überwachungseinrichtung ausgestattet ist, welche die Funktionen des Fernsteuerteils beim Entnehmen des Fernsteuerteils aus der Ablage einschaltend und vorgegebene Funktionen des Steuerpults abschaltend und beim Ablegen des Fernsteuerteils in der Ablage seine Funktionen abschaltend und die abgeschalteten Funktionen des Steuerpults einschaltend ausgebildet ist. Auf diese Weise wird sichergestellt, dass nicht unbeabsichtigt mit dem installierten Steuerpult Maschinenoperationen eingeschaltet werden können, während die Bedienungsperson mit dem Fernsteuerteil das Einrichten der Maschine steuert.

Es ist die Aufgabe der vorliegenden Erfindung, ein Verfahren und System zum Fernbedienen einer Werkzeugmaschine bereitzustellen, bei dem eine gleichzeitige Steuerung (Doppelbedienung) mittels des stationären Bediengeräts und eines mobilen Kommunikationsgeräts sicher verhindert werden kann.

Diese Aufgabe wird erfindungsgemäß durch ein Verfahren mit den Merkmalen von Anspruch 1 gelöst.

Erfindungsgemäß ist somit eine gleichzeitige Steuerung (Doppelbedienung) mittels des stationären Bediengeräts und des mobilen Kommunikationsgeräts sicher verhindert. Das mobile Kommunikationsgerät kann die Touch-Bedienoberfläche einer Werkzeugmaschine aus der Ferne entweder nur beobachten oder auch bedienen (fernsteuern).

Für die Aktivierung der Fernbedienung wird durch geeignete technische Maßnahmen sichergestellt, dass sich entweder der mobile Bediener an einem definierten Überwachungspunkt (Ort, an dem die Gefährdungsbereiche einsehbar sind, also in der Regel das Maschinenbedienpult) befindet oder eine Person mit Einblick in die Gefährdungsbereiche der Maschine die Freigabe erteilt und dass eine Verwechslung von Maschinen ausgeschlossen ist und nur die gewollte Maschine bedient werden kann. Zusätzlich werden technische Maßnahmen getroffen, die sicherstellen, dass diese Punkte nicht einfach umgangen werden können. Falls die mobile Bedienung trotz dieser Maßnahmen in Sondersituationen, wie z.B. Instandsetzungsarbeiten, ein erhöhtes Sicherheitsrisiko darstellt, kann die Funktionalität Mobile Bedienung jederzeit deaktiviert werden. Der Zustand der mobilen Fernbedienung wird am Bedienpult durch eine geeignete Visualisierung angezeigt.

Vorzugsweise werden die Aktivierung der Kommunikationsverbindung (Schritt a) und die Übergabe der Steuerungsbefugnisse (Schritt c) an der Werkzeugmaschine ausgeführt.

Weiterhin bevorzugt ist das mobile Kommunikationsgerät in seinem Steuerungsmodus ausschließlich indirekt über das stationäre Bediengerät mit der Maschinensteuerung der Werkzeugmaschine verbunden.

Die Verbindung des mobilen Kommunikationsgeräts mit dem stationären Bediengerät erfolgt am einfachsten über ein Funknetz, insbesondere über WLAN.

Besonders bevorzugt weist der Modus ohne Steuerungsberechtigung sicherheitsrelevante Steuerfunktionen auf, die der Fernsteuerungsmodus des mobilen Kommunikationsgeräts nicht aufweist, und in Schritt c) werden die Steuerungsbefugnisse mit Ausnahme der sicherheitsrelevanten Steuerfunktionen vom stationären Bediengerät auf das mobile Kommunikationsgerät übergeben. Sicherheitsrelevante Steuerfunktionen, also z.B. Notaus, Vorschubhalt, Vorschubhalt quittieren, Programmstart, Programmreset, Lichtschranke quittieren, etc., verbleiben dauerhaft beim stationären Bediengerät und können daher durch entsprechende Knöpfe ausschließlich am stationären Bediengerät oder dort, wo die Werkzeugmaschine einsehbar ist, ausgelöst werden. Daher kann als Kommunikationsgerät ein einfaches Consumergerät, z.B. ein Tabletcomputer, ohne Notaus-Schalter verwendet werden. Die Einschränkungen für den Benutzer des Kommunikationsgeräts sind minimal, obwohl er mit einem Consumergerät arbeitet.

Vorzugsweise wird mindestens ein Funktionsbereich der Werkzeugmaschine mittels mindestens einer Kamera aufgenommen, und der aufgenommene Funktionsbereich und die aktuell angezeigte Maschinenbedienoberfläche der Werkzeugmaschine werden an das mobile Kommunikationsgerät übertragen und dort gleichzeitig, insbesondere nebeneinander oder überlagert, angezeigt. Der Bediener kann auch dann, wenn er keine direkte Sicht auf den Funktionsbereich hat, die Werkzeugmaschine anhand der auf dem mobilen Kommunikationsgerät angezeigten Informationen fernsteuern.

Besonders bevorzugt überlagern die aufgenommenen Bilder die Maschinenbedienoberfläche teilweise transparent, so dass sowohl die Bilder der Kamera als auch die überlappte Maschinenbedienoberfläche gleichzeitig gesehen werden können. Bevorzugt ist die Maschinenbedienoberfläche im Hintergrund angeordnet, so dass die Maschinenbedienoberfläche in den nicht von Kamerabildern überlagerten Bereichen unmittelbar bedient werden kann. Die Kamerabilder des dargestellten Funktionsbereichs können beispielsweise durch Berühren der Kamerabilder auf der als Touchscreen ausgebildeten Kommunikationsgeräts und Bewegen der Berührstelle verschoben werden, so dass die Kamerabilder Bereiche der Maschinenbedienoberfläche nicht mehr überlagern und die Maschinenbedienoberfläche in diesen nicht mehr überlagerten Bereichen bedient werden kann. Insbesondere kann die Größe der dargestellten Kamerabilder verändert werden, beispielsweise durch eine Touch-Geste mit zwei Fingern (Pinch-to-Zoom).

Die Erfindung betrifft auch ein System zur Fernbedienung einer Werkzeugmaschine mit den Merkmalen von Anspruch 9.

Die Erfindung betrifft schließlich auch ein funknetzfähiges, insbesondere WLAN-fähiges, mobiles Kommunikationsgerät gemäß Anspruch 15. Das Kommunikationsgerät kann beispielsweise ein entsprechend programmiertes Smartphone oder Tabletcomputer sein, das folglich keinen Not-Halt-Schalter aufweist. Durch das mobile Kommunikationsgerät ist eine einfache Nachrüstung für Maschinen möglich, bei denen der Einsatz einer Fernbedienung ursprünglich nicht vorgesehen war.

Weitere Vorteile der Erfindung ergeben sich aus den Ansprüchen, der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:

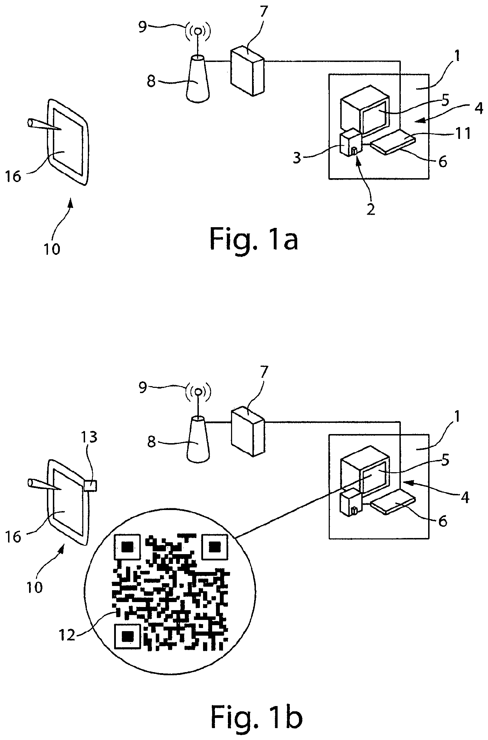

- Fign. 1a-1d: die einzelnen Verfahrensschritte des erfindungsgemäßen Verfahrens zum Fernbedienen einer Werkzeugmaschine mittels eines mobilen Kommunikationsgeräts.

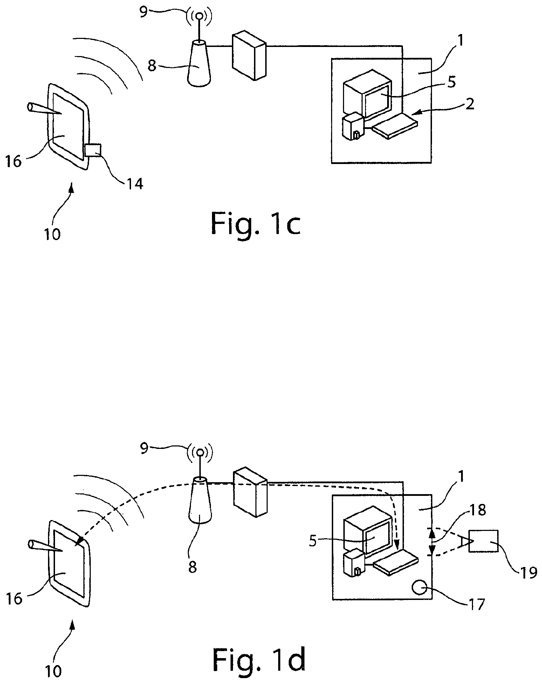

Fig. 1 zeigt schematisch eine Werkzeugmaschine 1, beispielsweise eine Maschine zum 2D- oder 3D-Laserschneiden oder -schweißen, zum Laser-Rohrschneiden, zum Stanzen, zur Stanz-Laser-Bearbeitung oder zum Biegen von Werkstücken. Die Werkzeugmaschine 1 wird mithilfe einer numerischen Maschinensteuerung 2 gesteuert, die hardwareseitig ein MMC(Man Machine Communication)-Bediensystem mit einem als Industrie-PC ausgebildeten Steuerungscomputer 3 und einem stationären Bediengerät ("Hauptbedienpult") 4 mit einem Bildschirm als Maschinenanzeige ("Maschinenbedienoberfläche") 5 und einer Eingabeeinheit (Tastatur, Maus oder Touchpanel) 6 umfasst.

Die Werkzeugmaschine 1 weist außerdem einen über eine Firewall 7 angeschlossenen Accesspoint 8 auf, um ein drahtloses lokales Funknetz 9, das im Folgenden als WLAN (Wireless Local Area Network) bezeichnet ist, aufzubauen. Ein Servicetechniker, ein Maschinenbediener oder eine andere berechtigte Person vor Ort kann mithilfe eines mobilen WLAN-fähigen Kommunikationsgeräts ("Fernbedienung") 10 eine drahtlose Verbindung mit dem WLAN 9 der Werkzeugmaschine 1 herstellen und somit Zugriff auf die Maschinensteuerung 2 erhalten. Das Kommunikationsgerät 10 stellt somit ein tragbares Fernbedienungsgerät dar und kann beispielsweise ein entsprechend konfiguriertes Smartphone oder Tabletcomputer sein.

Das stationäre Bediengerät 4 umfasst einen Steuerungsmodus zur Steuerung der Werkzeugmaschine 1 und einen Modus ohne Steuerungsberechtigung, der aber weiterhin sicherheitsrelevante Steuerfunktionen, wie z.B. Not-Halt-Funktion, aufweist. Das mobile Kommunikationsgerät 10 kann nur dann in einen Fernsteuerungsmodus zur Steuerung der Werkzeugmaschine 1 versetzt werden, wenn zuvor oder gleichzeitig das stationäre Bediengerät 4 in den Modus ohne Steuerungsberechtigung versetzt ist. Insbesondere weist das mobile Kommunikationsgerät 10 einen Fernsteuerungsmodus zur Steuerung der Werkzeugmaschine 1 und einen Modus ohne Steuerungsberechtigung zur Überwachung der Maschine auf. Bevorzugt fordert das stationäre Bediengerät 4 von dem mobilen Kommunikationsgerät 10 eine Übermittlung von (Anmelde)Informationen an, bevor es den Fernsteuerungsmodus des mobilen Kommunikationsgeräts 10 erlaubt.

In einer bevorzugten Variante wird das mobile Kommunikationsgerät 10 nur mittels lokal an der Werkzeugmaschine 1 abrufbarer Informationen in seinen Fernsteuerungsmodus versetzt, beispielsweise durch maschinen- oder personenlesbare Informationen. Insbesondere können diese Informationen auf dem Steuerungscomputer 3 erstellt werden und auf dem Bildschirm 5 im Klartext oder als QR-Code dargestellt und durch Eingabe oder Einlesen/Abscannen mittels Kamera auf das Kommunikationsgerät 10 übertragen werden. Weitere Alternativen sind die Informationsübertragung mittels Near Field Communication (NFC) oder Bluetooth auf das Kommunikationsgerät 10.

Erfindungsgemäß werden diese Informationen in einem separaten Schritt übertragen, wenn bereits eine Kommunikationsverbindung zwischen dem mobilen Kommunikationsgerät 10 und dem stationären Bediengerät 4 besteht, so dass die Kommunikationsverbindung auch ohne die nur lokal an der Werkzeugmaschine 1 abrufbaren Informationen mit der Maschine aufgebaut werden kann, wenn beispielsweise keine Fernbedienung, sondern nur eine Überwachung der Maschine erwünscht ist.

In einem alternativen Ausführungsbeispiel dienen diese Informationen zum Versetzen des Kommunikationsgeräts 10 in seinen Fernsteuerungsmodus und außerdem der Herstellung einer sicheren Kommunikationsverbindung über nur einmal gültige Einstellungen der Kommunikationsverbindung, bspw. WLAN-Schlüssel.

Zum Fernbedienen der Werkzeugmaschine 1 mittels eines mobilen Kommunikationsgeräts 10 werden folgende Verfahrensschritte durchgeführt:
a) Aktivieren einer Kommunikationsverbindung zwischen dem mobilen Kommunikationsgerät 10 und dem stationären Bediengerät 4;
b) Versetzen des stationären Bediengeräts 4 in den Modus ohne Steuerungsberechtigung, aber mit sicherheitsrelevanten Steuerfunktionen; und
c) Übergeben der Steuerungsbefugnisse mit Ausnahme der sicherheitsrelevanten Funktionen vom stationären Bediengerät 4 auf das mobile Kommunikationsgerät 10, indem gleichzeitig oder nach Schritt b) das mobile Kommunikationsgerät 10 in den Steuerungsmodus zur Steuerung der Werkzeugmaschine 1 versetzt wird.

Die Verbindung des mobilen Kommunikationsgeräts 10 mit der Werkzeugmaschine 1, also Verfahrensschritt a), kann dabei von einem Servicetechniker, oder alternativ einem Maschinenbediener oder einer anderen berechtigten Person, vor Ort beispielsweise wie folgt hergestellt werden.
1. Der Servicetechniker teilt der gewünschten Werkzeugmaschine 1 durch Betätigen einer Taste 11, die auch als Softkey eines Touchscreens ausgebildet sein kann, an der Werkzeugmaschine 1 mit, dass er sein Kommunikationsgerät 10 mit dieser Werkzeugmaschine 1 verbinden möchte. Die Werkzeugmaschine 1 erzeugt daraufhin einen Zufallscode und stellt auf ihrem Accesspoint 8 die Verschlüsselung entsprechend ein. Nach dieser Konfiguration des Accesspoints 8 aktiviert die Werkzeugmaschine 1 das WLAN 9 im Accesspoint 8 (Fig. 1a).
2. Die Werkzeugmaschine 1 zeigt auf ihrer Maschinenanzeige 5 die vom Kommunikationsgerät 10 benötigten WLAN-Zugangsdaten in Form eines PIN-Codes oder eines maschinenlesbaren QR-Codes 12 an, den der Servicetechniker mit einer Kamera 13 seines Kommunikationsgerät 10 einliest (Fig. 1b). Genauer gesagt ist die Maschinensteuerung 2 programmiert, die WLAN-Zugangsdaten als maschinenlesbarer QR-Code 12 auf der Maschinenanzeige 4 anzuzeigen und die WLAN-Zugangsdaten vor jedem Aufbauen der drahtlosen Verbindung neu zu erzeugen.
3. Das Kommunikationsgerät 10 dekodiert die optisch erfassten Zugangsdaten und verbindet sich damit zum WLAN 9 der Werkzeugmaschine 1 (Fig. 1c), woraufhin der maschinenlesbare QR-Code 12 von der Maschinenanzeige 5 wieder entfernt wird. Genauer gesagt weist das Kommunikationsgerät 10 eine Steuereinrichtung 14 auf, die programmiert ist, eine Funknetzverbindung zu dem WLAN 9 anhand der erfassten WLAN-Zugangsdaten aufzubauen.
4. Nun ist eine Kommunikationsverbindung 15 zwischen dem Kommunikationsgerät 10 und dem stationären Bediengerät 4 aktiviert, wie in Fig. 1d durch einen gestrichelten Pfeil angedeutet ist. Die Kommunikationsverbindung 15 kann beispielsweise eine Ferndesktopprotokoll-Kommunikationsverbindung sein.

Wenn diese Kommunikationsverbindung 15 aktiviert ist, wird von der Maschinensteuerung 2 zuerst das stationäre Bediengerät 4 in den Modus ohne Steuerungsberechtigung, aber mit sicherheitsrelevanten Steuerfunktionen versetzt (Verfahrensschritt b)) und dann das mobile Kommunikationsgerät 10 in den Fernsteuerungsmodus zur Steuerung der Werkzeugmaschine 1 versetzt, wodurch die Steuerungsbefugnisse mit Ausnahme der sicherheitsrelevanten Funktionen vom stationären Bediengerät 4 auf das mobile Kommunikationsgerät 10 übergehen (Verfahrensschritt c)). Die Werkzeugmaschine 1 kann nun über eine Bedien-Anzeige-Einrichtung 16, wie z.B. einen Touchscreen, des mobilen Kommunikationsgeräts 10 ferngesteuert werden, wobei das mobile Kommunikationsgerät 10 in seinem Fernsteuerungsmodus ausschließlich indirekt über das stationäre Bediengerät 4 mit der Maschinensteuerung 2 der Werkzeugmaschine 1 verbunden ist.

Die sicherheitsrelevanten Steuerfunktionen, wie z.B. Notaus, Vorschubhalt, Vorschubhalt quittieren, Programmstart, Programmreset, Lichtschranke quittieren, etc., verbleiben dauerhaft beim stationären Bediengerät 4 und können daher durch entsprechende Knöpfe ausschließlich am stationären Bediengerät 4 oder dort, wo die Werkzeugmaschine 1 einsehbar ist, ausgelöst werden. In Fig. 1d ist stellvertretend für die sicherheitsrelevanten Steuerfunktionen ein Not-Halt-Schalter 17 an der Werkzeugmaschine 1 vorhanden. Daher kann als Kommunikationsgerät 10 ein einfaches Consumergerät, z.B. ein Tabletcomputer, verwendet werden, auf dem das erfindungsgemäße Verfahren beispielsweise als App ablaufen kann. Die Einschränkungen für den Benutzer des Kommunikationsgeräts 10 sind minimal, obwohl er mit einem Consumergerät arbeitet. Durch das Kommunikationsgerät 10 ist eine einfache Nachrüstung für alte Maschinen möglich.

Wie in Fig. 1d weiter gezeigt ist, wird ein Funktionsbereich 18 (oder mehrere Funktionsbereiche) der Werkzeugmaschine 1 mittels einer Kamera 19 (oder mehrerer Kameras) aufgenommen. Der aufgenommene Funktionsbereich 18 und die auf der Maschinenanzeige 5 aktuell angezeigte Maschinenbedienoberfläche der Werkzeugmaschine 1 werden an das mobile Kommunikationsgerät 10 übertragen und dort gleichzeitig angezeigt, insbesondere nebeneinander oder überlagert.

Besonders bevorzugt überlagern die aufgenommenen Bilder die Maschinenbedienoberfläche teilweise transparent, so dass sowohl die Bilder der Kamera 19 als auch die überlappte Maschinenbedienoberfläche gleichzeitig gesehen werden können. Bevorzugt ist die Maschinenbedienoberfläche im Hintergrund angeordnet, so dass die Maschinenbedienoberfläche in den nicht von Kamerabildern überlagerten Bereichen unmittelbar bedient werden kann. Die Kamerabilder des dargestellten Funktionsbereichs 19 können beispielsweise durch Berühren der Kamerabilder auf der als Touchscreen ausgebildeten Kommunikationsgeräts 10 und Bewegen der Berührstelle verschoben werden, so dass die Kamerabilder Bereiche der Maschinenbedienoberfläche nicht mehr überlagern und die Maschinenbedienoberfläche in diesen nicht mehr überlagerten Bereichen bedient werden kann. Insbesondere kann die Größe der dargestellten Kamerabilder verändert werden, beispielsweise durch eine Touch-Geste mit zwei Fingern (Pinch-to-Zoom).

Im Folgenden wird das erfindungsgemäße Verfahren zum Fernbedienen der Werkzeugmaschine 1 mittels der mobilen Fernbedienung 10 nochmals mit anderen Worten beschrieben.

Zur Fernbedienung wird mit Hilfe von Remote Desktop Sharing Protokollen (z.B. VNC, RDP, pcAnywhere,...) der Bildschirminhalt des stationären Bediengeräts ("Hauptbedienpult") 4 der Werkzeugmaschine 1 auf das mobile Kommunikationsgerät ("Fernbedienung") 10 gespiegelt, und die zugehörigen Bedienevents (Maus, Touch, Tastatur, ... ) werden durchgereicht. Bei dieser Art von Fernbedienung kann nicht zwischen Aktionen, welche Bewegungen an der Werkzeugmaschine 1 auslösen, und Aktionen, welche zur Navigation innerhalb der Bediensoftware dienen, unterschieden werden. Daher wird es folgende Betriebsarten der mobilen Fernbedienung 10 geben:
- Beobachtungsmodus: Bedienevents der mobilen Fernbedienung 10 gesperrt, Bedienung auf dem Hauptbedienpult 4 möglich.
- Fernsteuerungsmodus: Bedienevents der mobile Fernbedienung 10 werden durchgereicht, Bedienung auf dem Hauptbedienpult 4, ausgenommen sicherheitsrelevante Steuerfunktionen, gesperrt.
   1. Die mobile Fernbedienung 10 verbindet sich mit dem WLAN 9 der Werkzeugmaschine 1. Das WLAN 9 strahlt dabei eine SSID aus, welches die Maschinennummer oder, falls vorhanden, den Spitznamen der Werkzeugmaschine 1 enthält.
   2. Sobald die mobile Fernbedienung 10 gestartet wird, ist sie automatisch im Beobachtungsmodus.
   3. Um mit der mobilen Fernbedienung 10 in den Fernsteuerungsmodus zu gelangen, muss die mobile Fernbedienung 10 eindeutig mit der Werkzeugmaschine 10 gekoppelt werden und die Bedienung vom Hauptbedienpult 4 auf die mobile Fernbedienung 10 übergeben werden. Dies geschieht über einen dynamischen QR-Code, welcher auf dem Bedienpult dargestellt wird und mit der Kamera der mobilen Fernbedienung 10 abgescannt werden muss. Die mobile Fernbedienung 10 überträgt den gelesenen Code zurück zur Werkzeugmaschine 1, die so entscheiden kann, ob die Bedienanfrage zulässig ist. Als Alternative für festmontierte Fernbedienungen 10 oder Fernbedienungen 10 ohne Kamera wird eine dynamische PIN angeboten, die alternativ zum QR-Code auf dem Bildschirm angezeigt wird und an der mobile Fernbedienung 10 eingegeben werden kann.
   4. Wenn die mobile Fernbedienung 10 im Fernsteuerungsmodus ist, kann auf dem Hauptbedienpult 4, ausgenommen sicherheitsrelevante Steuerfunktionen, nicht bedient werden. Bei lokalen Eingaben wird eine Warnmeldung angezeigt, in der eine Möglichkeit zum Zurückholen der Bedienung auf das Bedienpult 4 enthalten ist.
   5. Wenn die Bedienung auf das Hauptbedienpult 4 zurückgeholt wird, ist die Fernbedienung pausiert. Es ist auf der mobilen Fernbedienung 10 dann nur Beobachtung möglich. Im pausierten Zustand ist es jedoch ohne QR-Code wieder möglich, über den Softkey 11 die mobile Fernbedienung 10 wieder in den Fernsteuerungsmodus oder endgültig in den Beobachtungsmodus zu bringen. Die mobile Fernbedienung 10 muss sich, wenn sie im Beobachtungsmodus ist, erneut an der Werkzeugmaschine 1 authentifizieren, um in den Fernsteuerungsmodus zu wechseln.
   6. Wenn die im Bedienmodus befindliche mobile Fernbedienung 10 den WLAN-Empfangsbereich verlässt, wird auf der mobilen Fernbedienung 10 eine Warnmeldung eingeblendet, und es wird das letzte empfangene Bild der Bedienoberfläche 5 angezeigt. Die Bedienung auf dem Hauptbedienpult 4 bleibt solange gesperrt, damit, wenn die mobile Fernbedienung 20 wieder in den WLAN-Empfangsbereich kommt, gleich wieder fernbedient werden kann.

## Patentansprüche

1. Verfahren zum Fernbedienen einer Werkzeugmaschine (1), die ein stationäres Bediengerät (4) mit einem Steuerungsmodus zur Steuerung der Werkzeugmaschine (1) und mit einem Modus ohne Steuerungsberechtigung aufweist, mittels eines mobilen Kommunikationsgeräts (10), mit folgenden Verfahrensschritten:
a) Aktivieren einer Kommunikationsverbindung (15) zwischen dem mobilen Kommunikationsgerät (10) und der Werkzeugmaschine (1), insbesondere dem stationären Bediengerät (4);
b) Versetzen des stationären Bediengeräts (4) in den Modus ohne Steuerungsberechtigung; und
c) Übergeben der Steuerungsbefugnisse vom stationären Bediengerät (4) auf das mobile Kommunikationsgerät (10), indem gleichzeitig oder nach Schritt b) das mobile Kommunikationsgerät (10) in einen Fernsteuerungsmodus zur Steuerung der Werkzeugmaschine (1) versetzt wird,
**dadurch gekennzeichnet,**
**dass** in dem Verfahren das mobile Kommunikationsgerät (10) nur mittels lokal an der Werkzeugmaschine (1) abrufbarer Informationen in seinen Fernsteuerungsmodus versetzt wird und
**dass** diese Informationen in einem von Schritt a) separaten Schritt bei bereits bestehender Kommunikationsverbindung (15) zwischen dem mobilen Kommunikationsgerät (10) und dem stationären Bediengerät (4) übertragen werden.

2. Verfahren nach Anspruch 1, **dadurch gekennzeichnet, dass** Schritt a) und/oder Schritt c) an der Werkzeugmaschine (1) ausgeführt werden.

3. Verfahren nach einem der vorhergehenden Ansprüche, **dadurch gekennzeichnet, dass** das mobile Kommunikationsgerät (10) in seinem Fernsteuerungsmodus ausschließlich indirekt über das stationäre Bediengerät (4) mit der Maschinensteuerung (2) der Werkzeugmaschine (1) verbunden ist.

4. Verfahren nach Anspruch 3, **dadurch gekennzeichnet, dass** das mobile Kommunikationsgerät (10) mit dem stationären Bediengerät (4) über eine Ferndesktopprotokoll-Kommunikationsverbindung verbunden ist.

5. Verfahren nach einem der vorhergehenden Ansprüche, **dadurch gekennzeichnet, dass** das mobile Kommunikationsgerät (10) durch Ablesen und Eingeben einer PIN, Einlesen/Abscannen eines QR-Codes (12) oder durch einen Datenaustausch mittels Near Field Communication (NFC) oder Bluetooth in seinen Fernsteuerungsmodus versetzt wird.

6. Verfahren nach einem der vorhergehenden Ansprüche, **dadurch gekennzeichnet, dass** die Verbindung des mobilen Kommunikationsgeräts (10) mit dem stationären Bediengerät (4) über ein Funknetz (9), insbesondere über WLAN, erfolgt.

7. Verfahren nach einem der vorhergehenden Ansprüche, **dadurch gekennzeichnet, dass** der Modus ohne Steuerungsberechtigung weiterhin sicherheitsrelevante Funktionen aufweist und dass in Schritt c) die Steuerungsbefugnisse mit Ausnahme der sicherheitsrelevanten Funktionen vom stationären Bediengerät (4) auf das mobile Kommunikationsgerät (10) übergeben werden.

8. Verfahren nach einem der vorhergehenden Ansprüche, **dadurch gekennzeichnet, dass** mindestens ein Funktionsbereich (18) der Werkzeugmaschine (1) mittels mindestens einer Kamera (19) aufgenommen wird und dass der aufgenommene Funktionsbereich (18) und die aktuell angezeigte Maschinenbedienoberfläche (5) der Werkzeugmaschine (1) an das mobile Kommunikationsgerät (10) übertragen und dort gleichzeitig, insbesondere nebeneinander oder überlagert, angezeigt werden.

9. System zur Fernbedienung einer Werkzeugmaschine (1),
mit einem stationären Bediengerät (4) der Werkzeugmaschine (1), das einen Steuerungsmodus zur Steuerung der Werkzeugmaschine (1) und einen Modus ohne Steuerungsberechtigung aufweist, und
mit einem mobilen Kommunikationsgerät (10) zur Steuerung der Werkzeugmaschine (1), das nur dann in einen Fernsteuerungsmodus zur Steuerung der Werkzeugmaschine versetzbar ist, wenn zuvor oder gleichzeitig das stationäre Bediengerät (4) in den Modus ohne Steuerungsberechtigung versetzt ist, **dadurch gekennzeichnet,**
**dass** das mobile Kommunikationsgerät (10) nur mittels lokal an der Werkzeugmaschine (1) abrufbarer Informationen in seinen Fernsteuerungsmodus versetzbar ist und
**dass** das mobile Kommunikationsgerät (10) eingerichtet ist, diese Informationen in einem von Schritt a) separaten Schritt bei bereits bestehender Kommunikationsverbindung (15) zwischen dem mobilen Kommunikationsgerät (10) und dem stationären Bediengerät (4) zu übertragen.

10. Fernbedienungssystem nach Anspruch 9, **dadurch gekennzeichnet, dass** das mobile Kommunikationsgerät (10) in seinem Steuerungsmodus ausschließlich indirekt über das stationäre Bediengerät (4) mit der Maschinensteuerung der Werkzeugmaschine (1) verbunden ist.

11. Fernbedienungssystem nach Anspruch 10, **dadurch gekennzeichnet, dass** das mobile Kommunikationsgerät (10) mit dem stationären Bediengerät (4) über eine Ferndesktopprotokoll-Kommunikationsverbindung verbunden ist.

12. Fernbedienungssystem nach einem der Ansprüche 9 bis 11, **dadurch gekennzeichnet, dass** das mobile Kommunikationsgerät (10) mit dem stationären Bediengerät (4) über ein Funknetz (9), insbesondere über WLAN, verbunden ist.

13. Fernbedienungssystem nach einem der Ansprüche 9 bis 12, **dadurch gekennzeichnet, dass** der Modus ohne Steuerungsberechtigung weiterhin sicherheitsrelevante Steuerfunktionen aufweist, die der Fernsteuerungsmodus des mobilen Kommunikationsgeräts (10) nicht aufweist.

14. Fernbedienungssystem nach einem der Ansprüche 9 bis 13, **dadurch gekennzeichnet, dass** mindestens eine Kamera (19) zum Aufnehmen mindestens eines Funktionsbereichs (18) der Werkzeugmaschine (1) vorhanden ist und dass die Maschinensteuerung (2) der Werkzeugmaschine (1) programmiert ist, den von der Kamera (19) aufgenommenen Funktionsbereich (18) und die aktuell angezeigte Maschinenbedienoberfläche (5) der Werkzeugmaschine (1) an das mobile Kommunikationsgerät (10) zu übertragen und dort gleichzeitig, insbesondere nebeneinander oder überlagert, anzuzeigen.

15. Funknetzfähiges, insbesondere WLAN-fähiges, mobiles Kommunikationsgerät (10) zur Durchführung des Verfahrens nach Anspruch 6,
mit einer Bedien-Anzeige-Einrichtung (16), insbesondere mit einem Touchscreen, und
mit einer Steuereinrichtung (14), die programmiert ist, über ein Funknetz (9) eine Kommunikationsverbindung (15) mit dem stationären Bediengerät (4) aufzubauen und anschließend über die Kommunikationsverbindung (15) in einen Fernsteuerungsmodus versetzt zu werden, in welchem die Werkzeugmaschine (1) über die Kommunikationsverbindung (15) von der Bedien-Anzeige-Einrichtung (17) gesteuert wird.

## Claims

1. A method for remotely operating a machine tool (1) which comprises a stationary operating device (4) with a control mode for controlling the machine tool (1), and with a mode without control authorization, by means of a mobile communication device (10), with the following method steps:
a) activating a communication connection (15) between the mobile communication device (10) and the machine tool (1), in particular the stationary operating device (4);
b) switching the stationary operating device (4) to the mode without control authorization; and
c) transferring the control authorizations from the stationary operating device (4) to the mobile communication device (10) by switching the mobile communication device (10), simultaneously or after step b), to a remote control mode for controlling the machine tool (1),
**characterized in that**, in the method, the mobile communication device (10) is switched to its control mode only by means of information that is retrievable locally on the machine tool (1), and that this information is transmitted in a step separate from step a) with an already existing communication connection (15) between the mobile communication device (10) and the stationary operating device (4).

2. The method as claimed in claim 1, **characterized in that** step a) and/or step c) is carried out on the machine tool (1).

3. The method as claimed in one of the preceding claims, **characterized in that**, in its remote control mode, the mobile communication device (10) is connected exclusively indirectly via the stationary operating device (4) to the machine control (2) of the machine tool (1).

4. The method as claimed in claim 3, **characterized in that** the mobile communication device (10) is connected to the stationary operating device (4) via a Remote Desktop Protocol communication connection.

5. The method as claimed in one of the preceding claims, **characterized in that** the mobile communication device (10) is switched to its remote control mode by reading and entering a PIN, reading/scanning a QR code (12) or through a data exchange by means of Near Field Communication (NFC) or Bluetooth.

6. The method as claimed in one of the preceding claims, **characterized in that** the mobile communication device (10) is connected to the stationary operating device (4) via a radio network (9), in particular via a WLAN.

7. The method as claimed in one of the preceding claims, **characterized in that** the mode without control authorization furthermore has safety-related functions and that the control authorizations, with the exception of the safety-related functions, are transferred in step c) from the stationary operating device (4) to the mobile communication device (10).

8. The method as claimed in one of the preceding claims, **characterized in that** that at least one functional area (18) of the machine tool (1) is recorded by means of at least one camera (19) and that the recorded functional area (18) and the currently displayed machine user interface (5) of the machine tool (1) are transferred to the mobile communication device (10) and are displayed there simultaneously, in particular next to or overlaid over one another.

9. A system for remotely operating a machine tool (1), comprising a stationary operating device (4) of the machine tool (1) which has a control mode for controlling the machine tool (1) and a mode without control authorization, and
a mobile communication device (10) for controlling the machine tool (1) that is switchable to a remote control mode for controlling the machine tool only if the stationary operating device (4) is previously or simultaneously switched to the mode without control authorization,
**characterized in that** the mobile communication device (10) is switchable to its remote control mode only by means of information retrievable locally on the machine tool (1), and that the mobile communication device (10) is configured to transfer this information in a step separate from step a) with an already existing communication connection (15) between the mobile communication device (10) and the stationary operating device (4).

10. The remote operating system as claimed in claim 9, **characterized in that** the mobile communication device (10) is connected in its control mode exclusively indirectly via the stationary operating device (4) to the machine control of the machine tool (1).

11. The remote operating system as claimed in claim 10, **characterized in that** the mobile communication device (10) is connected to the stationary operating device (4) via a Remote Desktop Protocol communication connection.

12. The remote operating system as claimed in one of claims 9 to 11, **characterized in that** the mobile communication device (10) is connected to the stationary operating device (4) via a radio network (9), in particular via a WLAN.

13. The remote operating system as claimed in one of claims 9 to 12, **characterized in that** the mode without control authorization furthermore has safety-related functions which the remote control mode of the mobile communication device (10) does not have.

14. The remote operating system as claimed in one of claims 9 to 13, **characterized in that** at least one camera (19) is provided to record at least one functional area (18) of the machine tool (1) and that the machine control (2) of the machine tool (1) is programmed to transfer the functional area (18) recorded by the camera (19) and the currently displayed machine user interface (5) of the machine tool (1) to the mobile communication device (10) and display them there simultaneously, in particular next to or overlaid over one another.

15. A radio-network-enabled, in particular WLAN-enabled, mobile communication device (10) for carrying out the method as claimed in claim 6, comprising
an operating/display device (16), in particular a touch screen, and
a control device (14) which is programmed to set up a communication connection (15) via a radio network (9) to the stationary operating device (4) and then to be switched via the communication connection (15) to a remote control mode in which the machine tool (1) is controlled by the operating/display device (16) via the communication connection (15).

## Revendications

1. Procédé de télécommande, au moyen d'un appareil de communication mobile (10), d'une machine-outil (1) qui présente un appareil de commande fixe (4) doté d'un mode de commande pour commander la machine-outil (1) et d'un mode sans permission de commande, avec les étapes de procédé suivantes :
a) activation d'une liaison de communication (15) entre l'appareil de communication mobile (10) et la machine-outil (1), en particulier l'appareil de commande fixe (4) ;
b) transfert de l'appareil de commande fixe (4) dans le mode sans permission de commande ; et
c) transmission des autorisations de commande de l'appareil de commande fixe (4) à l'appareil de communication mobile (10), par le fait que, en même temps que l'étape b) ou à la suite de celle-ci, l'appareil de communication mobile (10) est transféré dans un mode de télécommande pour commander la machine-outil (1),
**caractérisé en ce que**, durant le procédé, l'appareil de communication mobile (10) est transféré dans son mode de télécommande uniquement au moyen d'informations pouvant être consultées localement sur la machine-outil (1),
et **en ce que** ces informations sont transmises au cours d'une étape séparée de l'étape a), la liaison de communication (15) entre l'appareil de communication mobile (10) et l'appareil de commande fixe (4) étant déjà existante.

2. Procédé selon la revendication 1, **caractérisé en ce que** l'étape a) et/ou l'étape c) sont exécutées sur la machine-outil (1).

3. Procédé selon l'une des revendications précédentes, **caractérisé en ce que** l'appareil de communication mobile (10) est, dans son mode de télécommande, relié à la commande machine (2) de la machine-outil (1) exclusivement indirectement par l'intermédiaire de l'appareil de commande fixe (4).

4. Procédé selon la revendication 3, **caractérisé en ce que** l'appareil de communication mobile (10) est relié à l'appareil de commande fixe (4) par l'intermédiaire d'une liaison de communication à protocole RDP (Remote Desktop Protocol).

5. Procédé selon l'une des revendications précédentes, **caractérisé en ce que** l'appareil de communication mobile (10) est transféré dans son mode de télécommande par relèvement et saisie d'un numéro d'identification personnel (PIN) ou lecture/balayage d'un code QR (12), ou par un échange de données par communication en champ proche (NFC - Near Field Communication) ou par Bluetooth.

6. Procédé selon l'une des revendications précédentes, **caractérisé en ce que** la liaison de l'appareil de communication mobile (10) avec l'appareil de commande fixe (4) s'effectue par l'intermédiaire d'un réseau sans fil (9), en particulier par l'intermédiaire d'un réseau local sans fil (WLAN - Wireless Local Area Network).

7. Procédé selon l'une des revendications précédentes, **caractérisé en ce que** le mode sans permission de commande présente encore des fonctions sécuritaires et **en ce que**, à l'étape c), les autorisations de commande à l'exception des fonctions sécuritaires sont transmises de l'appareil de commande fixe (4) à l'appareil de communication mobile (10).

8. Procédé selon l'une des revendications précédentes, **caractérisé en ce qu'**au moins une zone fonctionnelle (18) de la machine-outil (1) est enregistrée au moyen d'au moins une caméra (19), et **en ce que** la zone fonctionnelle enregistrée (18) et l'interface utilisateur actuellement affichée (5) de la machine-outil (1) sont transmises à l'appareil de communication mobile (10) et y sont affichées simultanément, en particulier en juxtaposition ou en superposition.

9. Système de télécommande d'une machine-outil (1),
avec un appareil de commande fixe (4) de la machine-outil (1), qui présente un mode de commande pour commander la machine-outil (1) et un mode sans permission de commande,
et avec un appareil de communication mobile (10) pour commander la machine-outil (1), appareil qui ne peut être transféré dans un mode de télécommande pour commander la machine-outil que si, préalablement ou simultanément, l'appareil de commande fixe (4) est transféré dans le mode sans permission de commande,
**caractérisé en ce que** l'appareil de communication mobile (10) ne peut être transféré dans son mode de télécommande qu'au moyen d'informations pouvant être consultées localement sur la machine-outil (1),
et **en ce que** l'appareil de communication mobile (10) est conçu pour transmettre ces informations au cours d'une étape séparée de l'étape a), la liaison de communication (15) entre l'appareil de communication mobile (10) et l'appareil de commande fixe (4) étant déjà existante.

10. Système de télécommande selon la revendication 9, **caractérisé en ce que** l'appareil de communication mobile (10) est, dans son mode de télécommande, relié à la commande machine de la machine-outil (1) exclusivement indirectement par l'intermédiaire de l'appareil de commande fixe (4).

11. Système de télécommande selon la revendication 10, **caractérisé en ce que** l'appareil de communication mobile (10) est relié à l'appareil de commande fixe (4) par l'intermédiaire d'une liaison de communication à protocole RDP (Remote Desktop Protocol).

12. Système de télécommande selon l'une des revendications 9 à 11, **caractérisé en ce que** l'appareil de communication mobile (10) est relié à l'appareil de commande fixe (4) par l'intermédiaire d'un réseau sans fil (9), en particulier par l'intermédiaire d'un réseau local sans fil (WLAN - Wireless Local Area Network).

13. Système de télécommande selon l'une des revendications 9 à 12, **caractérisé en ce que** le mode sans permission de commande présente encore des fonctions sécuritaires, fonctions que ne présente pas le mode de télécommande de l'appareil de communication mobile (10).

14. Système de télécommande selon l'une des revendications 9 à 13, **caractérisé en ce qu'**au moins une caméra (19) est présente pour enregistrer au moins une zone fonctionnelle (18) de la machine-outil (1), et **en ce que** la commande machine (2) de la machine-outil (1) est programmée pour transmettre à l'appareil de communication mobile (10) la zone fonctionnelle (18) enregistrée par la caméra (19) et l'interface utilisateur actuellement affichée (5) de la machine-outil (1), et pour les y afficher simultanément, en particulier en juxtaposition ou en superposition.

15. Appareil de communication mobile (10) pouvant être utilisé sur un réseau sans fil, en particulier pouvant être utilisé sur un réseau local sans fil (WLAN - Wireless Local Area Network), pour la mise en oeuvre du procédé selon la revendication 6,
avec un équipement (16) de commande et d'affichage, en particulier avec un écran tactile,
et avec un équipement de commande (14), qui est programmé pour établir par l'intermédiaire d'un réseau sans fil (9) une liaison de communication (15) avec l'appareil de commande fixe (4), et pour être ensuite, par l'intermédiaire de la liaison de communication (15), transféré dans un mode de télécommande dans lequel la machine-outil (1) est commandée par l'équipement (16) de commande et d'affichage par l'intermédiaire de la liaison de communication (15).
